# EUROPEAN PATENT SPECIFICATION

(11) **EP 3 544 883 B1**
(45) Date of publication and mention of the grant of the patent: **16.04.2025**
(21) Application number: 17874792.9
(22) Date of filing: 24.11.2017
(51) Int. Cl.: B62L 3/08, B62L 3/02, B60T 8/26, B60T 1/08, F16L 27/093, F16L 41/04

(54) **A TWO-WHEELED VEHICLE WITH SYNCHRONIZED BRAKING SYSTEM**
ZWEIRÄDRIGES FAHRZEUG MIT SYNCHRONISIERTEM BREMSSYSTEM
VÉHICULE À DEUX ROUES DOTÉ D'UN SYSTÈME DE FREINAGE SYNCHRONISÉ

(30) Priority: 24.11.2016 IN 201641040199
(43) Date of publication of application: 02.10.2019
(73) Proprietor: TVS Motor Company Limited, Chennai 600006 (IN)
(72) Inventor: ARULMURUGAN, P S, Chennai 600006 (IN); KAKKANATTU MATHEWS, Winney, Chennai 600006 (IN)
(74) Representative: Patentanwaltskanzlei Matschnig & Forsthuber OG
(86) International application number: PCT/IB2017/057378
(87) International publication number: WO 2018/096493

(56) References cited:
- EP-A1- 2 540 587
- EP-A1- 2 565 090
- WO-A1-2016/113756
- US-A1- 2010 052 416
- US-B2- 6 688 440

## Description

### TECHNICAL FIELD

The present invention relates to a two-wheeled motor vehicles provided with a synchronized braking system, and, in particular relates, to mounting of a pressure control device of the synchronized braking system of the two-wheeled motor vehicle.

### BACKGROUND

In the last few decades, two-wheeler automobile industry has shown a remarkable growth and development, in terms of technology as well as sales. Due to consistent advancement in technology, two-wheeled vehicles, such as bicycles, motorcycles, scooters and lightweight scooters, have succeeded in maintaining their popularity among different sections of society. Different sections of society, based on their requirement, utilize the two-wheeled vehicles for various purposes, such as a recreational activity, a means of transportation, and for sports activities. As a result, it becomes pertinent for the two-wheeler automobile industry to constantly develop and modify the components of the two-wheeled vehicles to suit requirements of different riders.

In accordance with the same ideology, various types of braking systems have been developed for facilitating braking functionalities in the two-wheeled vehicles. Conventionally, braking systems that allow simultaneous actuation of a front brake and a rear brake upon application of a single brake lever have gained widespread popularity across the globe.

Generally, two-wheeled vehicles are provided with a pair of mechanically operated drum brakes. However, with the advent of braking technology, hydraulically operated disc brakes have come to use. Such disc brakes are capable of being installed on both front and rear wheels. However, vehicles with disc brakes installed only on to front wheels are most commonly used. Such a determination of whether to use two disc brakes or one is primarily based on the capacity of the vehicle and the maximum load capable of being carried by the vehicle. Generally, for lesser capacity vehicles that are not expected to reach very high-speed levels are provided with a single disc brake, preferably, on to the front wheel of the vehicle. However, with varying applications, a disc brake is provided on the rear wheel also.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

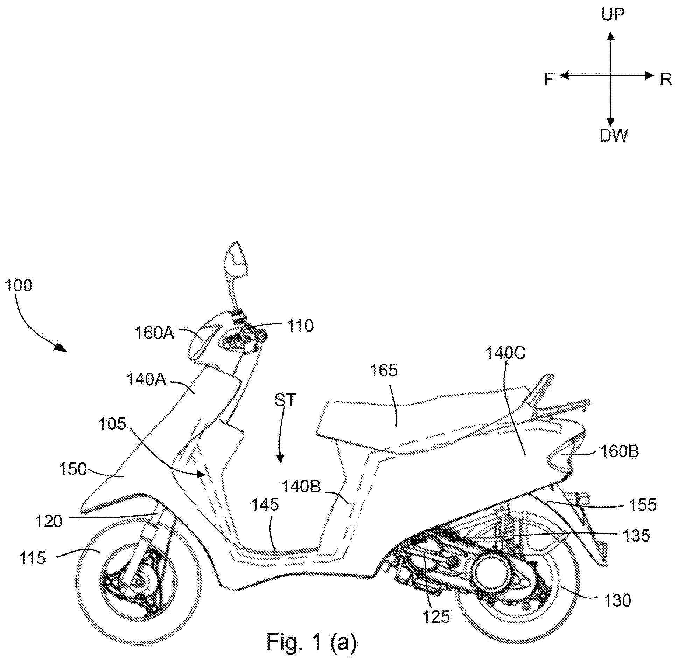

Fig. 1 (a) illustrates a left side view of an exemplary two-wheeled motor vehicle, in accordance with an embodiment of the present subject matter.

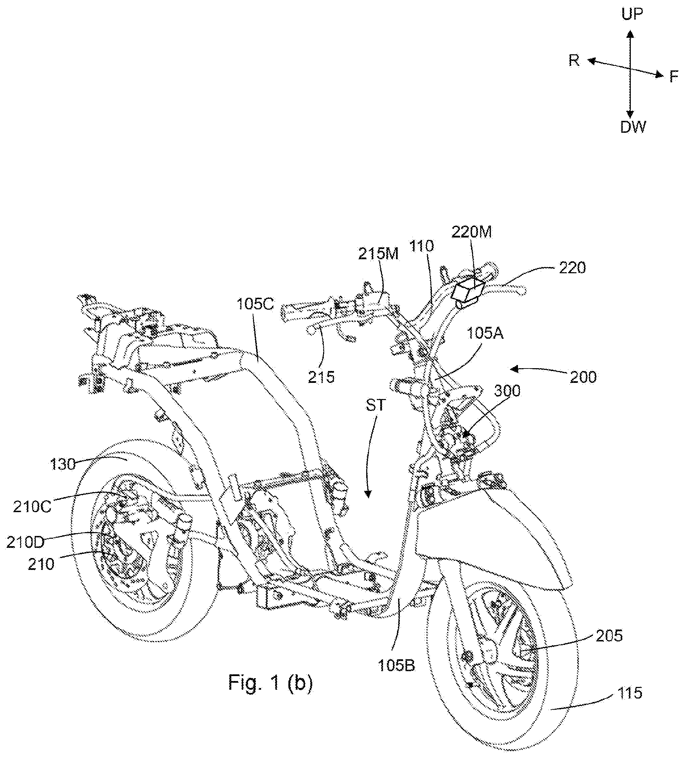

Fig. 1 (b) illustrates a frame assembly of the vehicle provided with selected vehicular parts, in accordance with the embodiment depicted in Fig. 1 (a).

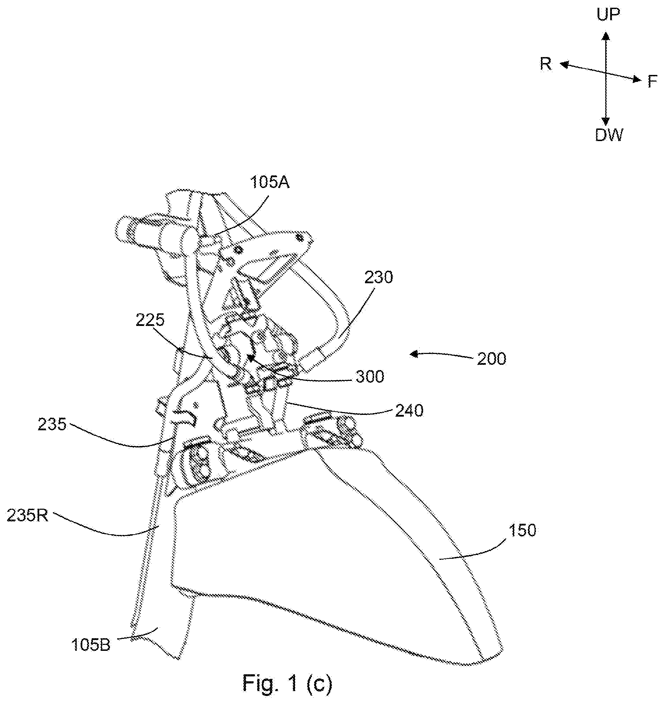

Fig. 1 (c) depicts an enlarged view of the frame assembly of the vehicle, in accordance with the embodiment depicted in Fig. 1 (b).

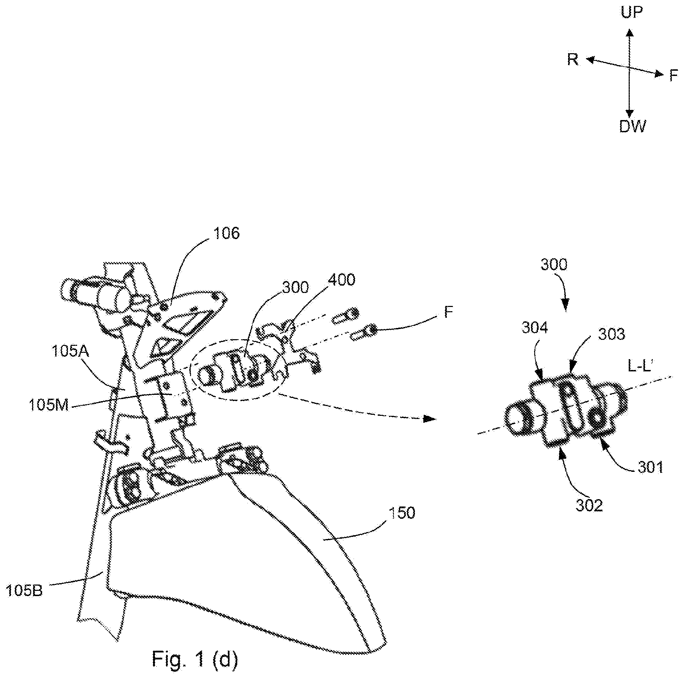

Fig. 1 (d) depicts an exploded view of the pressure control device of the braking system employed on the vehicle, in accordance with the embodiment depicted in Fig. 1 (b).

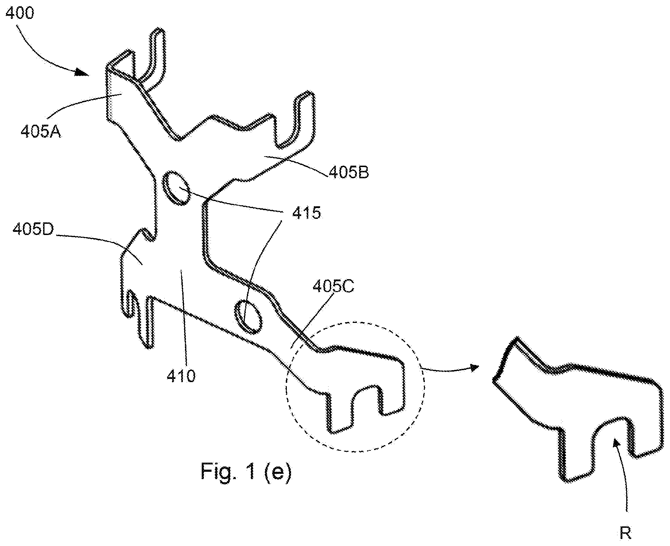

Fig. 1 (e) depicts an isometric view of an orientation bracket, in accordance with the embodiment of Fig. 1 (b).

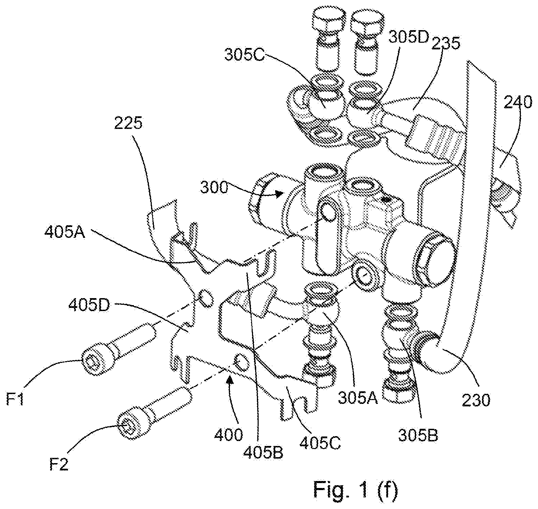

Fig. 1 (f) depicts an exploded view of the pressure control device and assembly thereof, in accordance with the embodiment depicted in Fig. 1 (c).

### DETAILED DESCRIPTION

Conventionally, two-wheeled vehicles or the like are provided with a braking system for slowing or stopping the vehicle. The braking system, usually, includes at least one brake assembly, such as a front wheel brake assembly and a rear wheel brake assembly for a front wheel and a rear wheel, respectively. Such brake assemblies may include, but are not limited to a cam lever, a cam pin, and a pair of friction pads or other means of actuation of the friction pads. Further, each of the front wheel brake assembly and the rear wheel brake assembly is connected to a brake lever for actuation. For example, the brake lever may be coupled to a pair of friction pads for applying friction to each wheel of the two-wheeled vehicle, as and when required. The brake lever can be connected to the brake assembly in a variety of ways. For example, the brake lever can be connected to the brake assembly by means of a cable. In such a case, one end of the cable may be secured to the brake assembly, and the other end of the cable may be secured to the brake lever. Consequently, actuation of the brake lever may result in actuation of the brake assembly and subsequently, the brake may be applied. Nevertheless, the brake assembly can be connected to the lever by means of hydraulic system. Also, in some applications, combination of the cable and the hydraulic means is used.

Generally, the front wheel and the rear wheel are provided with separate braking systems. Conventional two-wheeler braking systems usually either include hand-operated brakes for both the wheels or include a combination of hand-operated and foot-operated brakes. In the latter case, generally, the front wheel brakes are hand-operated, and include a front wheel brake lever mounted on a handle of the two-wheeled vehicle for actuation, whereas the rear wheel brakes can be foot-operated by a rear wheel brake lever provided near a footrest of the rider. However for saddle type scooters, both brakes may be actuated by hand operated brake levers.

During operation of the brakes, usually, riders apply the rear wheel brake alone. Such a practice stems from the fact that actuating both the brake levers at the same time may be inconvenient for the rider. In addition, when the front wheel brake is applied weight transfer towards the front wheel cause the front wheel to brake abruptly, and may result in a sudden jerk to the vehicle. The sudden jerk may affect the ride quality and may disturb the balance and stability of the vehicle leading to an accident. However, on the other hand, the braking force applied for application of braking force to the rear wheel may have to be limited, to prevent skidding of the vehicle. As a result, the deceleration experienced by the vehicle may also be limited and subsequently, the stopping distance of the vehicle may be significantly large.

Conventionally, in order to address the above-mentioned concerns, braking systems that allow simultaneous actuation of a front brake and a rear brake by application of a single brake lever have been developed. Such braking system is capable of uniting the braking operation of both the front wheel brake and the rear wheel brake with the help of a single brake lever, for example the rear wheel brake lever. Accordingly, upon actuation of the single brake lever, such a braking system may allow distribution of braking force to the front wheel as well as the rear wheel of the vehicle. Therefore, the front wheel brake and the rear wheel brake can be simultaneously applied by actuating one brake lever, for example, the rear wheel brake lever. In addition to being convenient for the rider, such braking systems may ensure that the deceleration of the vehicle can be increased and subsequently, the stopping distance may be reduced. Further, as would be understood, in two-wheeled vehicles with such braking systems, a front wheel brake lever may also be provided to independently operate the front wheel brake. Such systems having front and rear brake system actuated in a coordinated manner termed as synchronized braking system.

Generally, the motor vehicles like two-wheeled vehicles are provided with disc brake for certain application or to improve safety. The disc brake is provided on the front wheel and may be installed on the rear wheel. The disc brake is actuated through hydraulic means. Therefore, a pressure control device is used in order to distribute the pressure or force by a pre-determined pressure or at a predeterminate ratio to the front wheel brake and the rear wheel brake. The pressure control device is to be securely mounted to the vehicle for optimum functioning of the braking system, which is an essential safety system of the vehicle. However, presence of various vehicle systems, moving parts complicates the mounting of the pressure control device. Also, the pressure control device is provided hydraulic connectors and the orientation, angle of such connectors is essential during assembly as it heavily impacts the brake hose routing in the vehicle layout. Conventionally, anti-rotation members are provided in casting of the pressure control device. However, such pressure control device limits the flexibility of use various vehicle layouts. Additionally, the routing of the hose in case of disc brake and routing of cables in case of drum brakes, their length determines the performance of the brake system. Longer hose or cable length tend to lead to spongy feel of the brake system and leads to low durability owing to friction losses. Thus it is important to have an optimum location for the pressure control device without compromising the performance and durability of the system. There is a need to locate the device on the sprung mass of the vehicle & at the same time securely located in case of minor accidental fall of the vehicle. Additionally, it is required to locate the device at optimum distance from majority of the components of the vehicle as well as substantially away from the engine induced vibrations to minimize disturbances.

Moreover, in a two-wheeled with a step-through type layout, which is commonly called as 'scooter', further complicates implementation of the synchronized braking system. The scooter has a step-through space and also provides a utility box. This reduces the available space on the vehicle for mounting the vehicle parts. The power unit and other components including air induction system, exhaust system, etc. are tightly packaged in the vehicle. The pressure control device, which an essential element of the synchronized braking system of vehicles with front and rear disc brakes is to be securely mounted to the vehicle. The pressure control device is one of biggest parts of the synchronized braking system, which requires substantial amount space. Moreover, hydraulic tubing/piping with the associated pressure control device require ample amount of space and also require longer hoses thereby increasing cost of the system. Also, the piping is made of an elastic material, which is prone to fail upon reciprocating movement of the suspension, especially at the joining portions of the hydraulic piping to the pressure control device. Failure of the pressure control device results in drastic safety related issues as the braking system is an essential safety system.

Document such as EP2565090A1 is aimed at addressing problem related to deflection of brake hoses when they are apart from a head pipe, in case of ABS module disposed in vicinity of a head pipe. This document teaches an ABS module mounted forward of the head pipe and offset to one side with respect to a lateral center of the vehicle. Coupling members positioned offset to other side with respect to the lateral center and arranged at mid-section of corresponding piping.

Moreover, another document such as EP2540587A1 is aimed at addressing problem related to larger space requirement for longer length hydraulic pipes extending between brake controller and ABS modulator, when an ABS modulator and delay valve are disposed in a center in a longitudinal direction of vehicle. This document teaches an ABS modulator arranged in front of a head pipe and the delay valve disposed by side of the ABS modulator

Therefore, the pressure control device is to be mounted to vehicle and at the same time without affecting the functionality, as it is an essential element of the braking system. In addition, the pressure control device is to be securely mounted in the tightly packed vehicle layout, without modifying the layout of the vehicle.

Thus, it is an object of the present invention to address the aforementioned and other problems stated above.

Hence, the present invention provides a motor vehicle provided with a synchronized braking system. The synchronized braking system includes a pressure control device functionally connected to at least one brake lever adapted to synchronously actuate the rear wheel brake and the front wheel brake. The pressure control device is disposed in proximity to a head tube of frame assembly of the vehicle.

It is a feature of the present invention that the pressure control device disposed in proximity to the head tube is a mechanically or electromechanically operated to provide braking force to the front wheel brake and the rear wheel brake upon actuation of the at least one brake lever, which acts a synchronous brake lever that is a rear brake lever. In other words, the pressure control device of the synchronized braking system enables actuation at least two brakes installed on different wheels by the operation of a single control, which is the synchronous brake lever. Moreover, the front lever is capable of independently actuating only the front brake lever.

At least one brake lever is mounted to a handle bar assembly that is rotatable about a head tube of the frame assembly. In an embodiment, both the front brake lever and the rear brake lever are mounted to the handle bar assembly. The handle bar assembly is connected to the front wheel through suspension(s) and rotatable about the head tube through a steering tube. The front wheel brake is installed on at least one front wheel. The pressure control device is mounted to the head tube, which is in proximity to the handle bar assembly and the front wheel brake thereby reducing the piping length. It is a feature of the present invention that the friction losses, due to the flow of fluid, are reduced due to the reduced piping lengths. In a motorcycle type of vehicle, one brake lever is mounted to the handle bar assembly that is hand operated and other brake lever, which is synchronous brake lever, is mounted near the rider foot to enable foot operation.

The pressure control device is disposed in proximity to the head tube of the frame assembly, and the pressure control device is at least approximately equidistant from at least one brake lever mounted to a handle bar assembly rotatably supported by the head tube and in proximity to said front wheel brake. Therefore, the pressure control device at least approximately equidistant from at least one brake lever mounted to the handle bar assembly and from the front wheel brake, whereby the pressure control device is in proximity to the brake lever(s) mounted to handle bar assembly and in proximity to the front wheel brake thereby providing optimum and short routing lengths for hose(s).

A first input hose connecting a synchronous brake lever to the pressure control device, a second input hose connecting a front brake lever to the pressure control device, and a second output hose connecting the pressure control device to the front wheel brake, wherein ratio of length of hose with maximum length to the length of another hose with minimum length being in the range of 0.8 to 1.2 whereby the vehicle with the pressure control device provides optimum hose length.

In an embodiment, the front brake lever is connected to the pressure control device. Therefore, the front wheel brake is also actuated through the pressure control device.

The present invention provides a pressure control device assembly capable of supporting the pressure control device, which is capable of actuating the front wheel brake independently, irrespective of the size of the pressure control device. It is one more advantage that the vehicle layout is retained in spite of mounting aforementioned pressure control device.

The pressure control device is mounted to the head tube, which is substantially at lateral center of the vehicle thereby retaining the weight distribution of the vehicle. Further aspect being, the motor vehicle provides the flexibility to bring the center of the vehicle to vehicle lateral center by disposing the pressure control device at an offset to counter-balance the center of gravity.

The present invention provides the flexibility for the pressure control device disposed in proximity to the head tube is positioned substantially at along a lateral centre of the vehicle. This enables in maintaining a centre of gravity of the vehicle in lateral direction as a centre of gravity of the pressure control device and a centre of gravity of the vehicle are provided in line providing lateral balance.

The present invention enables the pressure control device to be disposed at a lateral offset from a lateral centre of the vehicle and in proximity to the head tube whereby the pressure control device balances a centre of the gravity of the vehicle. The direction of offset of the pressure control device is substantially opposite to the lateral direction of the vehicle at which the centre of gravity shift when the pressure control device is not present.

Further, the pressure control device disposed in proximity to the head tube is substantially in away from the power unit which is one of heavy parts of the vehicle thereby providing balance of weight or centre of gravity in the longitudinal direction of the vehicle.

The pressure control device of the present subject matter is capable of being retrofitted to the head tube of the frame assembly.

The pressure control device of the present subject matter is securely disposed away from the power unit of the vehicle that is prone to vibrations that could otherwise affect the function of the pressure control device. Thus, the reliable operation of the system is improved.

The pressure control device is disposed in proximity to the head tube and is supported by at least one of the head tube or the main tube. It is an advantage that the pressure control device is securely and rigidly mounted to the structural member of the vehicle.

It is an aspect that the length of the connecting pipes is/are provided with optimum length to accommodate the rotation motion of the handle bar assembly and to accommodate the reciprocating motion of the suspension. In an embodiment, the synchronized braking system is provided with both flexible and rigid pipes, wherein rigid pipes are disposed at non-moving part portion(s) of the vehicle.

The connecting pipes are provided with intermediate connectors that connect hoses to the pressure control device. The intermediate joints includes banjo joints are connected to the ports of the pressure control device.

The present invention provides an orientation bracket that is abuttingly disposed adjacent to the pressure control device, wherein the orientation bracket is provided with plurality of arm members that are provided with receiving portions to enable correct/fool proof fitment mounting of the intermediate joints to the respective ports. It is advantageous that the failure due to wrong connections is eliminated.

The orientation member supports intermediate connectors to have a specific orientation whereby the hose being connected to the intermediate connector is also retained in desired orientation.

The orientation bracket being independent of the pressure control valve enables use of different orientation bracket with different vehicle layout to suit the hose routing for respective vehicle.

The pressure control device is securely mounted to the frame assembly in proximity to the head tube with a long axis of the pressure control device disposed in at least one orientation with the long axis disposed along an axis parallel to the lateral direction or longitudinal direction of the vehicle. The present invention provides flexibility in mounting the pressure control device in any desired orientation including at an inclination with respect to the longitudinal axis of the vehicle.

The pressure control device includes at least one input port disposed in a downward direction to enable smooth curved routing of one or more hoses connecting the at least one brake lever mounted to the handle bar assembly to the pressure control device. This further enables the hoses to be connected with larger radius curvature with reduced flow resistance thereby by providing desired braking performance.

The pressure control device includes at least one output port disposed in an upward direction to enable optimum routing of the one or more output hoses to at least one of the front wheel brake and the rear wheel brake.

The pressure control device includes at least one input port disposed in upward direction in proximity to the at least one brake lever mounted to the handle bar assembly thereby providing optimum routing of one or more input hoses when required. Also, at least one output port is disposed in a downward direction in proximity to the front wheel brake thereby providing optimum cable routing when required.

The pressure control device is mounted in proximity to the handle bar assembly and to the front wheel brake thereby minimizing overall tubing length. It is a further advantage that the cost of the system is reduced.

The pressure control device is mounted to the front facing side of the head tube is enclosed by a front panel. The pressure control device is mounted to the vehicle by securing it from the external parameters and accidental damage. Moreover, it is yet another advantage that servicing for air bleeding is capable of being performed with minimal parts removal, like removal of the front panel only, thereby improving the serviceability.

The aspects of the present invention is not limited to two-wheeled vehicle used herein and predominantly includes motor vehicles with a saddle ride-type layout that are similar to the two wheeled vehicles.

Moreover, the current invention is applicable to a three-wheeled vehicle comprising a front wheel and a pair of rear wheels or vice versa, wherein the three-wheeled vehicle includes a frame assembly with a head tube.

These and other advantages of the present invention would be described in greater detail in conjunction with the figures in the following description.

Fig. 1 (a) illustrates a left side view of an exemplary motor vehicle 100, in accordance with an embodiment of the present invention. The motor vehicle 100 has a frame assembly 105 having a step-through type layout. A handlebar assembly 110 is mounted to a steering shaft (not shown). The steering shaft is rotatably supported by the frame assembly 105 whereby the handle bar assembly 110 is rotatable about the frame assembly 105 to steer the vehicle. A front wheel 115 is connected to the handle bar assembly 110 through one or more front suspension(s) 120. A power unit 125 is swingably mounted to the frame assembly 105. The power unit includes at least one of an internal combustion engine and a traction motor. Further, the power unit 125 includes a transmission system (not shown) including an automatic transmission, a continuously variable transmission, or a fixed ratio transmission.

Further, the power unit 125 is coupled to a rear wheel 130 through the transmission system. Also, the rear wheel 130 is connected to the frame assembly 105 through one or more rear suspension(s) 135. A seat assembly 165 is disposed upwardly of the power unit 125 and is supported by the frame assembly 105. A storage compartment (not shown) is provided below the seat assembly 165 and is also supported by the frame assembly 105. The utility box is accessible in an open condition of the seat assembly 165.

Furthermore, the vehicle 100 is provided with plurality of panels 140A, 140B, and 140C that are mounted to the frame assembly 105 and covering the vehicle parts. Especially, a front panel 140A is disposed forward to the head tube 105A. In the present embodiment, the vehicle includes a floorboard 145 disposed at a step-through space ST defined by the frame assembly 105. The user operates the vehicle by resting feet on the floorboard 145, in a seated position. A front fender 150 is covering at least a portion of the front wheel 110. In the present embodiment, the front fender 150 is integrated with a front panel 140A of the vehicle 100. A rear fender 155 covers at least a portion of the rear wheel 130. The front fender 150 and the rear fender 155 prevent splashing of dirt on to the vehicle parts and away from the vehicle 100. A fuel tank (not shown) is supported by the frame assembly 105 and is functionally coupled to the power unit 125. The vehicle 100 comprises of plurality of electrical/electronic components including a headlight 160A, a tail light 160B, a battery (not shown), a transistor controlled ignition (TCI) unit (not shown), an alternator (not shown), a starter motor (not shown).

Fig. 1 (b) illustrates a right side perspective view of the frame assembly of the vehicle employed/provided with vehicle parts, in accordance with the embodiment as depicted in Fig. 1 (a). The frame assembly 105 includes a head tube 105A, a main tube 105B extending rearward from the head tube 105A, and one or more rear tubes 105C extending inclinedly rearward from a rear portion of the main tube 105B. In the depicted embodiment, the main tube 105B extends rearwardly downward from the head tube 105A defining the step-through space ST. The vehicle 100 is employed with a front wheel brake 205 and a rear wheel brake 210 functionally connected to the front wheel 115 and the rear wheel 130, respectively. In an embodiment, the front wheel brake 205 is a hydraulically operated disc brake 205 and the rear wheel brake 210 is a hydraulically operated disc brake 210. However, the vehicle may be employed with hydraulically operated mechanical brakes like a drum brake.

Further, the vehicle 100 includes a synchronized braking system 200 that is provided with a synchronous brake lever 220 mounted to the handle bar assembly 110 of the vehicle 100 in the present implementation. Also, a front wheel brake lever 215 is mounted to the handle bar assembly 110, which functions as an independent brake lever. In an embodiment, the front wheel brake lever 215 is provided on a right side of the handle bar 100 and the synchronous brake lever 220 is provided on the left side of the handle bar 100. A rider may actuate the front brake lever 215 to apply the front wheel brake 205. Similarly, actuation of the synchronous brake lever 220 applies both the front wheel brake 205 and the rear wheel brake 210. The disc brake 210 is provided with a disc 210D affixed to the rear wheel 130 and caliper(s) 210C that are functionally coupled to the disc 210D and fixed at a swing arm or the like. The caliper is supported by the front suspension 120 in case of the disc brake 205 employed on the front wheel.

The front brake lever 215 is coupled to a master cylinder 215M, which is connected to the brake caliper(s) of the front wheel brake 205 through a first input hose 225 (shown in Fig. 1 (c)). Upon operation of the front brake lever 215, pressure is generated in the master cylinder 215M that is transferred to the brake calipers (not shown) of the front wheel brake 205 through the first input hose 225. Further, the synchronous brake lever 220 is coupled to another master cylinder 220M, which is connected to a pressure distribution device 300 that is connected to the front brake caliper and the rear brake caliper 210C through a front brake-output hose 240 and a rear brake-output hose 235, respectively. The rear brake-output hose is referred to as first output hose 235 and the front brake-output hose 240 is referred to as second output hose 240 for brevity. The pressure distribution device 300 is a pressure control device. Hereinafter, the terms 'pressure control device' and the 'pressure distribution device' are interchangeably used. Therefore, operation of the synchronous brake lever 220 generates pressure in the master cylinder 215M that is transferred to the pressure control device 300. From the pressure control device 300, the pressure is distributed to the front wheel brake 205 and the rear wheel brake 210 at a pre-determined ratio. Also, the pressure distribution device 300 is disposed in proximity to the head tube 105A of the vehicle 100. In an implementation, the pressure distribution device 300 is disposed adjacently ahead of the head tube 105A and is secured to the head tube 105A.

Fig. 1 (c) depicts an enlarged view of the front portion of the vehicle 100, in accordance with the embodiment depicted in Fig. 1 (b). The pressure distribution device 300 is affixed to the head tube 105A and is positioned at the front facing side of the head tube 105A. In the present embodiment, the pressure distribution device 300 is functionally connected to the front brake lever 215 and the synchronous brake lever 220, which is specifically to a front brake input port 302 and to a synchronous brake input port 301 of the pressure control device 300, respectively. Also, the pressure control device 300 includes a front brake output port 303 and a rear brake output 304 (the input port(s) 301, 302 and the output port(s) 303, 304 are depicted in Fig. 1 (d)). Operation of the front brake lever 215 will generate pressure in the master cylinder 215M, which is functionally coupled to the front brake lever 215, is transferred to the front brake input port of the pressure control device 300 through the first input hose 225. This pressure is transferred to the front wheel brake 205 through a second output hose 240 thereby actuating the front wheel brake 205. The second output hose 240 extends from the pressure control device 300 towards the front wheel brake 205. Similarly, operation of the synchronous brake lever 220 results in generation of pressure in the master cylinder 220M functionally coupled to synchronous brake lever 220. The pressure from the master cylinder 220M is transferred to the pressure control device 300 through a second input hose 230, which is a synchronous brake input hose 230, connected to the pressure control device 300. Then, the pressure from pressure control device 300 is transferred to both the front wheel brake 205 and the rear wheel brake 210 through the second output hose 240 and the first output hose 235 connected to the front brake output and the rear brake output, respectively. The first output hose 235 extends rearward from the pressure control device 300 and is supported by at least a portion of the main tube 105B. Further, the first output hose 235 comprises a rigid hose portion 235R that is provided from the main tube 105B towards a floorboard portion 145 of the vehicle 100.

During operation of the brake lever 215, 220, force is exerted on an actuation rod that displaces the piston(s) in the master cylinder 215M. The displacement of the piston causes an increase in the pressure of the entire system, forcing fluid through the one or more hoses. During operation of the front brake lever 215, the increase in pressure is transferred to the front brake input port of the pressure control device 300 through the second input hose. In the present embodiment, the front brake input of the pressure control device 300 communicates directly with the front brake output thereby actuating the front wheel brake 205.

Similarly, operation of the synchronous brake lever transfers increase in pressure to the synchronous brake input of the pressure control device 300. This change in pressure is displaces a piston provided in the pressure control device 300 thereby effecting a change in pressure through the front brake output and the rear brake output of the pressure control device 300, thereby actuating both the front wheel brake and rear wheel brake. Therefore, the pressure control device 300 disposed in the front portion vehicle 100 and in proximity of the head tube 105A provides optimum routing of the hose(s) to the at least one brake lever 215, 220 mounted to the handle bar assembly 110 and to the front wheel brake 205 being substantially equidistant therebetween. The pressure control device 300 being at least approximately equidistant from brake levers 215 & 200 and from the front wheel brake 205 requiring optimum length of the hose(s) making it cost effective. Also, number of bends required for routing the hose(s) is minimized.

In one embodiment, the front brake system is independent of the synchronous brake system.

The pressure control device 300 is connected to the front brake lever 215, to the synchronous brake lever 220, the front wheel brake 205, and the rear wheel brake 210 through plurality of flexible hoses 225, 230, 235, 240. Especially, the handle bar assembly 110 supporting the front brake lever 215 and the rear brake lever 220 is a rotating member and as the pressure control device 300 disposed below the handle bar assembly 110 is rigidly and securely fixed to the frame assembly 105 without adding any weight on the moving/rotating members like the front wheel 115 or the rear wheel 120. Also, the position of the pressure control device 300 with reference to the front wheel brake 205 is varying due to the presence of front suspension 120 that compresses and expands with the road conditions. Thus, the one or more hoses are made of flexible material enable avoidance of damage of hoses. In addition, the length of the hose is substantially greater that the distance between the points of connection to accommodate the aforementioned variations.

Provision of the pressure control device 300 at the head tube 105A facilitates use of optimum length of hose 240 for connecting the pressure control device 300 to the front brake lever 215 and the rear brake lever 220. Also, the pressure control device 300 is at optimum distance and between the handle bar assembly 110 and the front wheel brake 205 thereby providing optimum hose routing. Further, the plurality of hoses is connected to the pressure control device 300 through intermediate connector(s) 305A, 305B, 305C, 305D (shown in Fig. 1 (f)).

Fig. 1 (d) depicts an exploded view of the pressure control device 300 of the braking system employed on the vehicle, in accordance with the embodiment depicted in Fig. 1 (b). The frame assembly 105 is affixed with a mounting member 105M that is welded to the frame assembly 105. In other embodiment, the mounting member 105M is affixed to the frame assembly 105. In the present embodiment, the mounting member 105M is having a U-shaped profile with an opening of the U-shape facing the frame assembly 105. The mounting member 105M is affixed to the front facing side of the head tube 105A through the ends of the mounting member 105M. The U-shaped profile provides clearance between a peripheral surface of the head tube 105A and the mounting member 105M thereby enabling ease of assembly of the pressure control device 300 using fasteners. Further, the mounting member 105M is provided with one or more mounting point(s) for securing the pressure control device 300 to the mounting member 105M, wherein in one embodiment the mounting point(s) are apertures. Moreover, the mounting point(s) are provided so as to align with one or more mounting point(s) provided on the pressure control device 300, thereby enabling mounting of the pressure control device 300 in a desired orientation.

Further, the first input hose 225, the second input hose 230, and the second output hose 240 are provided with lengths with a ratio of maximum length to minimum length being in the range of 0.8 to 1.2 whereby the vehicle 100 with the pressure control device 300 provides optimum hose length.

In the present implementation, the pressure control device 300 is securely mounted to the frame assembly 105 in proximity to the head tube 105A in at least one orientation. In the depicted embodiment, the pressure control device is disposed in a first orientation with a long axis L-L' thereof is substantially parallel to a lateral direction RH-LH of the vehicle 100. The pressure control device 300 includes at least one input port 301, 302 disposed in a downward direction DW to enable smooth curved routing of the input hoses 225, 230 connecting to at least one brake lever 215, 220 to the pressure control device 300. The pressure control device 300 includes at least one output port 303, 304 disposed in an upward direction UP to enable optimum routing of the one or more hoses 303, 304 in to at least one of the front wheel brake 205 and the rear wheel brake 210.

The pressure control device 300is disposed behind the front panel 140A and above a front fender 150. The front panel 140A is covering at least a portion of the pressure control device 300, and the front panel 140A is supported by an additional bracket 106 mounted to the head tube 105A. The additional bracket 106 is extending in forward direction F beyond a forward most portion of the pressure control device 300. Also, the front panel 140A in removed condition provides access to the pressure control device 300 and also hoses connected thereto.

The pressure control device 300 is disposed in a second orientation with the long axis L-L' thereof disposed substantially parallel to the longitudinal direction F-R of the vehicle 100. Therefore, head tube 105A supports an auxiliary power source (not shown) or electrical components like horn or head lamp in the front facing side of head tube 105A and the pressure control device 300 is disposed towards one lateral side RH or LH of the frame assembly 105 and in proximity to the head tube 105A to provide optimum routing of the hose(s).

Furthermore, an orientation bracket 400 is provided that abuts against the pressure control device 300. One or more fasteners F are used to secure the orientation bracket 400 and the pressure control device 300 to the mounting member 105M. The orientation bracket 400 is alternatively referred to as a poka-yoke bracket 400 herein. However, in another embodiment, the poka-yoke bracket 400 is secured to the pressure control device 300 by snap-fit, a clip-on type fit, or any known securing means.

In the present implementation, the intermediate connector(s) are banjo joint(s) that comprises of a perforated hollow bolt and spherical union for fluid transfer. Through the hollow bolt the hose is secured to the at least one of the input(s) and output(s) of the pressure control device 300. However, there is a possibility of wrong assembly due to the use of plurality of hoses and their respective banjo joint. Thus, a poka-yoke bracket 400 is provided that is secured to the pressure control device 300. The poka-yoke bracket 400 works in conjunction with banjo joints. Fig. 1 (e) depicts an isometric view of the poka-yoke bracket 400, in accordance with the present embodiment.

The poka-yoke bracket 400 includes plurality of arm members 405A, 405B, 405C, 405D. The number of arm members 405A, 405B, 405C, 405D provided is equivalent to the number of input and number of output ports being provided on the pressure control device 300. In the depicted embodiment, the poka-yoke bracket 400 is provided with four arm members 405A, 405B, 405C, 405D. The arm members are supported by a base portion (not shown). The base portion 410 is provided with mounting points 415 that align with the mounting points provided on the pressure control device 300 and the mounting member 105M. Each arm member of the poka-yoke bracket 400 extends towards each of the input ports 301, 302 and each of the output ports 303, 304 of the pressure control device 300. Also, each of the arm members 405A, 405B, 405C, 405D is provided with a receiving portion R. In the present embodiment, the receiving portion R is formed by a U-shaped cutout. The arm and the receiving portion are oriented in a specific direction so as to receive an intermediate connector 305A, 305B, 305C, 305D (shown in Fig. 1 (e)) that are provided with a with a specific orientation. Therefore, the arm members 405A, 405B, 405C, 405D are provided to enable reception of specific intermediate connectors 305A, 305B, 305C, 305D like banjo joint at a specific port of the pressure control device 300. Hence, correct mounting of the banjo joints is achieved thereby eliminating functional failure due to wrong assembly thereby providing easy and fool proof assembly.

Fig. 1 (f) depicts an exploded view of the pressure control device 300 assembly, in accordance with the embodiment depicted in Fig. 1 (c). In the present embodiment, four banjo joints 305A, 305B, 305C, 305D that function as intermediate connectors are secured to ends of the hoses 225, 230, 235, and 240, respectively. According to the present embodiment, the pressure control device 300 is provided with a front brake input port 301 and a synchronous brake input port 302 positioned on a downward portion of the pressure control device 300. Similarly, a front brake output port 303 and a rear brake output port 304 are provided in the upward direction/portion UP of the pressure control device 300. A first banjo joint 305A connects the synchronous brake lever 220 to the pressure control device 300, and a second banjo joint 305B connects the front brake lever 215 to the pressure control device 300. Further, the input ports are provided on opposite sides to the position the brake levers are disposed to provide a smooth and large curvature. Similarly, a third banjo joint 305C and a fourth banjo joint 305D connect the rear wheel brake 210 and the front wheel brake 205 to the pressure control device 300, respectively. Moreover, the banjo joints 305A, 305B, 305C, 305D enable ease of assembly of the connection without affecting the hoses 225, 230, 235 and 240. The banjo joints being made of rigid material like metal enables hoses to be retained in a desired orientation. Additionally, the present invention with the pressure control device 300 disposed in proximity to the head tube 105A provides flexibility to change the position of the ports depending on the vehicle layout requirements.

The arm members 405A, 405B. 405C, and 405D (as shown in Fig. 1 (e)) of the poka-yoke bracket 400 extend towards the aforementioned port(s), and only one banjo joint of the plurality of banjo joints abuts against the receiving portion(s) R of the banjo joint(s) 305A, 305B, 305C, and 305D. Moreover, this enables use of same pressure control device 300 in a different vehicle layout by merely changing the poka-yoke bracket 400 in accordance to the desired layout. Also, the fasteners F1, F2 securely hold the pressure control device 300 and the poka-yoke bracket 400 to the mounting member 105M.

Also, provision of the orientation bracket 400 independent of the pressure control device 300 enables use of the same pressure control device 300 for different vehicle layouts with mere modification of the orientation bracket 400 according to the pressure control device 300 orientation.

## Claims

1. A two-wheeled motor vehicle (100) comprising a synchronized braking system (200), said vehicle (100) comprising:
a frame assembly (105) comprising a head tube (105 A) disposed in a front portion thereof;
a front wheel brake (205) capable of applying braking forces to at least one front wheel (115), said at least one front wheel (115) rotatable about said head tube (105 A) to enable steering of said vehicle (100);
a rear wheel brake (210) capable of applying braking forces to at least one rear wheel (130);
a pressure control device (300) of said synchronized braking system (200) is functionally connected to said rear wheel brake (210) through a first output hose (235) and is functionally connected to said front wheel brake (205) through a second output hose (240), said pressure control device (300) capable of being actuated by a synchronous brake lever (220), said pressure control device (300) is securely disposed in proximity to said head tube (105A) of the frame assembly (105); **characterised by**
an orientation bracket (400) disposed adjacent to said pressure control device (300) and is adapted to work with said pressure control device (300) to enable fool proof fitment of one or more intermediate connector/s (305A, 305B, 305C, 305D) connecting one or more hose/s (225, 230, 235, 240) to said pressure control device (300), wherein
said orientation bracket (400) includes one or more arm members (405A, 405B, 405C, 405D) and each of the one or more arm members (405 A, 405B, 405C, 405D) includes a receiving portion (R) capable of receiving only specific intermediate connector of said one or more intermediate conector/s (305 A, 305B, 305C, 305D) thereby enabling said fool proof fitment and said arm member (405 A, 405B, 405C, 405D) retains the intermediate connectors (405 A, 405B, 405C, 405D) in a specific orientation thereby retaining a desired orientation of the one or more hoses (225, 230, 235, 240).

2. The two-wheeled motor vehicle (100) as claimed in claim 1, wherein said pressure control device (300) is substantially equidistant from at least one brake lever (215, 220) mounted to a handle bar assembly (110) rotatable about said head tube (105A) and from said front wheel brake (205).

3. The two-wheeled motor vehicle (100) as claimed in claim 1, wherein said pressure control device (300) is securely disposed ahead of said head tube (105 A), and said pressure control device (300) is having a long axis (L-L') disposed substantially in a first orientation being parallel to a lateral direction (RH-LH) of said motor vehicle (100).

4. The two-wheeled motor vehicle (100) as claimed in claim 1, wherein said pressure control device (300) is securely disposed towards one lateral side (RH, LH) of said head tube (105A), and said pressure control device (300) is having a long axis (L-LD) disposed in a second orientation being parallel to a longitudinal direction (F-R) of said motor vehicle (100).

5. The two-wheeled motor vehicle (100) as claimed in claim 1, 3 or 4, wherein said pressure control device (300) is securely mounted to said frame assembly (105) in proximity to said head tube (105A) in at least one of said first orientation or said second orientation, and said pressure control device (300) includes at least one input port (301, 302) disposed in a downward direction (DW) to enable curved routing of one or more input hoses (225, 230) connecting said at least one brake lever (215, 220) thereto and said pressure control device (300) includes at least one output port (303, 304) disposed in an upward (UP) direction to enable routing of said one or more output hoses (235, 240) to at least one of said front wheel brake (205) and said rear wheel brake (210).

6. The two-wheeled motor vehicle (100) as claimed in claim 1, 3 or 4, wherein said pressure control device (300) is securely mounted to said frame assembly (105) in proximity to said head tube (105A) in at least one of said first orientation and said second orientation, and said pressure control device (300) includes at least one input port (301, 302) disposed in an downward direction (DW) and includes at least one output port (303, 304) disposed in a upward direction (UP).

7. The two-wheeled motor vehicle (100) as claimed in claim 1 or 3, wherein said pressure control device (300) is mounted to a front facing side of head tube (105 A) and is disposed below said handle bar assembly (110) and is above said front wheel brake (120) therebetween, whereby said pressure control device (300) is substantially equidistant to said synchronous brake lever (220) mounted to said handle bar assembly (110) and to said front wheel brake (205).

8. The two-wheeled motor vehicle (100) as claimed in claim 1, wherein said pressure control device (300) is affixed to a mounting member (105M) secured to said frame assembly (105), said mounting member (105M) is having a U-shaped profile with clearance to enables fastening of said pressure control device (300), and said mounting member (105M) includes one or more mounting point(s) provided to align with one or more mounting point(s) provided on the pressure control device (300) thereby enabling mounting of the pressure control device (300) in a desired orientation.

9. The two-wheeled motor vehicle (100) as claimed in claim 1, wherein said pressure control device (300) is disposed substantially at along a lateral centre of the vehicle (100) whereby a centre of gravity of the pressure control device (300) and a centre of gravity of the vehicle (100) are in line providing balance in a lateral direction (RH-LH).

10. The two-wheeled motor vehicle (100) as claimed in claim 1, wherein said pressure control device (300) is disposed at a lateral offset from a lateral centre of the vehicle (100) whereby the pressure control device (300) balances a centre of the gravity of the vehicle (100).

11. The two-wheeled motor vehicle (100) as claimed in claim 1, wherein said pressure control device (300) is connected to one brake lever ( 220) and other brake lever (215) through a first input hose (225) and a second input hose (230), respectively, and said pressure control device (300) is connected to said front wheel brake (205) through a second hose (240), and wherein said a ratio of maximum length to minimum length between the first input hose (255), the second input hose (230), and the second output hose (240) being in the range of 0.8 to 1.2.

12. The two-wheeled motor vehicle (100) as claimed in claim 1, wherein said pressure control device (300) is disposed behind a front panel (140A) and above a front fender (150), said front panel (140A) is covering at least a portion of the pressure control device (300), and said front panel (140A) is supported by an additional bracket (106) mounted to said head tube (105A) extending in forward direction (F) beyond a forward most portion of said pressure control device (300).

13. The two-wheeled vehicle (100) as claimed in claim 1, wherein said pressure control device (300) is connected to a front brake lever (215) for application of braking force independently to the front wheel brake (205) and said front brake lever (215) is mounted to said handle bar assembly (110) of said vehicle (100).

14. An orientation bracket (400) adapted to work with a pressure control device (300) of a synchronized braking system (200) for a two-wheeled motor vehicle (100) according to any one of claims 1 to 13, said orientation bracket (400) comprising:
- a base portion (410); and
- one or more arm members (405A, 405B, 405C, 405D) supported by said base portion (410),
wherein
said one or more arm members (405 A, 405B, 405C, 405D) is/are configured to extend towards one or more input port/s (301, 302) and towards one or more output port/s (303, 304) of said pressure control device (300), and each of said one or more arm members (405A, 405B, 405C, 405D) includes a receiving portion (R) capable of receiving only a one or more specific intermediate connector (305A, 305B, 305C, 305D) connecting one or more hose/s (224, 230, 235, 240) to said pressure control device (300) thereof.

## Patentansprüche

1. Zweirädriges Kraftfahrzeug (100) mit einem synchronisierten Bremssystem (200), wobei das Fahrzeug (100) umfasst:
eine Rahmenbaugruppe (105) mit einem Steuerrohr (105 A), das in einem vorderen Abschnitt davon angeordnet ist;
eine Vorderradbremse (205), die in der Lage ist, Bremskräfte auf mindestens ein Vorderrad (115) auszuüben, wobei das mindestens eine Vorderrad (115) um das Steuerrohr (105 A) drehbar ist, um das Lenken des Fahrzeugs (100) zu ermöglichen;
eine Hinterradbremse (210), die in der Lage ist, Bremskräfte auf mindestens ein Hinterrad (130) auszuüben;
eine Drucksteuervorrichtung (300) des synchronisierten Bremssystems (200), die funktionell mit der Hinterradbremse (210) durch einen ersten Ausgangsschlauch (235) verbunden ist und funktionell mit der Vorderradbremse (205) durch einen zweiten Ausgangsschlauch (240) verbunden ist, wobei die Drucksteuervorrichtung (300) in der Lage ist, durch einen Synchronbremshebel (220) betätigt zu werden, wobei die Drucksteuervorrichtung (300) sicher in der Nähe des Kopfrohrs (105A) der Rahmenanordnung (105) angeordnet ist; **gekennzeichnet durch**
eine Ausrichtungshalterung (400), die neben der Drucksteuervorrichtung (300) angeordnet ist und so beschaffen ist, dass sie mit der Drucksteuervorrichtung (300) zusammenwirkt, um eine narrensichere Befestigung eines oder mehrerer Zwischenverbinder (305A, 305B, 305C, 305D) zu ermöglichen, die einen oder mehrere Schläuche (225, 230, 235, 240) mit der Drucksteuervorrichtung (300) verbinden, wobei
die Ausrichtungshalterung (400) ein oder mehrere Armteile (405A, 405B, 405C, 405D) enthält und jedes der ein oder mehreren Armteile (405A, 405B, 405C, 405D) einen Aufnahmeabschnitt (R) enthält, der in der Lage ist, nur einen bestimmten Zwischenverbinder des einen oder der mehreren Zwischenverbinder (305A, 305B, 305C, 305D) aufnehmen kann, wodurch der narrensichere Sitz ermöglicht wird, und das Armelement (405 A, 405B, 405C, 405D) die Zwischenverbinder (405 A, 405B, 405C, 405D) in einer bestimmten Ausrichtung hält, wodurch eine gewünschte Ausrichtung des einen oder der mehreren Schläuche (225, 230, 235, 240) beibehalten wird.

2. Zweirädriges Kraftfahrzeug (100) nach Anspruch 1, wobei die Drucksteuervorrichtung (300) im Wesentlichen gleich weit von mindestens einem Bremshebel (215, 220), der an einer um das Steuerrohr (105A) drehbaren Lenkstangenanordnung (110) angebracht ist, und von der Vorderradbremse (205) entfernt ist.

3. Zweirädriges Kraftfahrzeug (100) nach Anspruch 1, wobei die Drucksteuervorrichtung (300) sicher vor dem Steuerrohr (105 A) angeordnet ist und die Drucksteuervorrichtung (300) eine lange Achse (L-L') aufweist, die im Wesentlichen in einer ersten Ausrichtung parallel zu einer seitlichen Richtung (RH-LH) des Kraftfahrzeugs (100) angeordnet ist.

4. Zweirädriges Kraftfahrzeug (100) nach Anspruch 1, wobei die Drucksteuervorrichtung (300) sicher in Richtung einer Seite (RH, LH) des Kopfrohrs (105A) angeordnet ist und die Drucksteuervorrichtung (300) eine lange Achse (L-LD) aufweist, die in einer zweiten Ausrichtung parallel zu einer Längsrichtung (F-R) des Kraftfahrzeugs (100) angeordnet ist.

5. Zweirädriges Kraftfahrzeug (100) nach Anspruch 1, 3 oder 4, wobei die Drucksteuervorrichtung (300) fest an der Rahmenanordnung (105) in der Nähe des Steuerrohrs (105A) in mindestens einer der ersten Ausrichtung oder der zweiten Ausrichtung angebracht ist und die Drucksteuervorrichtung (300) mindestens einen Eingangsanschluss (301, 302) aufweist, der in einer Abwärtsrichtung (DW) angeordnet ist, um eine gekrümmte Führung eines oder mehrerer Eingangsschläuche (225, 230) zu ermöglichen, die den mindestens einen Bremshebel (215, 220) damit verbinden, und die Drucksteuervorrichtung (300) mindestens einen Ausgangsanschluss (303, 304) aufweist, der in einer Aufwärtsrichtung (UP) angeordnet ist, um eine Führung des einen oder der mehreren Ausgangsschläuche (235, 240) zu mindestens einer der Vorderradbremse (205) und der Hinterradbremse (210) zu ermöglichen.

6. Zweirädriges Kraftfahrzeug (100) nach Anspruch 1, 3 oder 4, wobei die Drucksteuervorrichtung (300) fest an der Rahmenanordnung (105) in der Nähe des Steuerrohrs (105A) in mindestens einer der ersten Ausrichtung und der zweiten Ausrichtung angebracht ist und die Drucksteuervorrichtung (300) mindestens einen Eingangsanschluss (301, 302) aufweist, der in einer Abwärtsrichtung (DW) angeordnet ist, und mindestens einen Ausgangsanschluss (303, 304) aufweist, der in einer Aufwärtsrichtung (UP) angeordnet ist.

7. Zweirädriges Kraftfahrzeug (100) nach Anspruch 1 oder 3, wobei die Drucksteuervorrichtung (300) an einer der Vorderseite zugewandten Seite des Steuerrohrs (105 A) angebracht und unterhalb der Lenkstangenbaugruppe (110) und oberhalb der Vorderradbremse (120) dazwischen angeordnet ist, wodurch die Drucksteuervorrichtung (300) im Wesentlichen in gleichem Abstand zu dem Synchronbremshebel (220), der an der Lenkstangenbaugruppe (110) angebracht ist, und zu der Vorderradbremse (205) liegt.

8. Zweirädriges Kraftfahrzeug (100) nach Anspruch 1, wobei die Drucksteuerungsvorrichtung (300) an einem Montageelement (105M) befestigt ist, das an der Rahmenanordnung (105) befestigt ist, wobei das Montageelement (105M) ein U-förmiges Profil mit Spiel aufweist, um die Befestigung der Drucksteuerungsvorrichtung (300) zu ermöglichen, und wobei das Montageelement (105M) einen oder mehrere Montagepunkte aufweist, die vorgesehen sind, um sich mit einem oder mehreren Montagepunkten auszurichten, die an der Drucksteuerungsvorrichtung (300) vorgesehen sind, wodurch die Montage der Drucksteuerungsvorrichtung (300) in einer gewünschten Ausrichtung ermöglicht wird.

9. Zweirädriges Kraftfahrzeug (100) nach Anspruch 1, wobei die Drucksteuerungsvorrichtung (300) im Wesentlichen entlang einer seitlichen Mitte des Fahrzeugs (100) angeordnet ist, wodurch ein Schwerpunkt der Drucksteuerungsvorrichtung (300) und ein Schwerpunkt des Fahrzeugs (100) in einer Linie liegen und ein Gleichgewicht in einer seitlichen Richtung (RH-LH) bereitstellen.

10. Zweirädriges Kraftfahrzeug (100) nach Anspruch 1, wobei die Drucksteuereinrichtung (300) seitlich versetzt von einem seitlichen Mittelpunkt des Fahrzeugs (100) angeordnet ist, wodurch die Drucksteuereinrichtung (300) einen Schwerpunkt des Fahrzeugs (100) ausgleicht.

11. Zweirädriges Kraftfahrzeug (100) nach Anspruch 1, wobei die Drucksteuervorrichtung (300) mit einem Bremshebel (220) und dem anderen Bremshebel (215) über einen ersten Eingangsschlauch (225) bzw. einen zweiten Eingangsschlauch (230) verbunden ist und die Drucksteuervorrichtung (300) mit der Vorderradbremse (205) über einen zweiten Schlauch (240) verbunden ist, und wobei das Verhältnis der maximalen Länge zur minimalen Länge zwischen dem ersten Eingangsschlauch (255), dem zweiten Eingangsschlauch (230) und dem zweiten Ausgangsschlauch (240) im Bereich von 0. 8 bis 1,2 liegt.

12. Zweirädriges Kraftfahrzeug (100) nach Anspruch 1, wobei die Drucksteuervorrichtung (300) hinter einer Frontplatte (140A) und oberhalb eines vorderen Kotflügels (150) angeordnet ist, die Frontplatte (140A) zumindest einen Teil der Drucksteuervorrichtung (300) abdeckt und die Frontplatte (140A) von einer zusätzlichen Halterung (106) getragen wird, die an dem Steuerrohr (105A) angebracht ist, das sich in Vorwärtsrichtung (F) über einen vordersten Abschnitt der Drucksteuervorrichtung (300) hinaus erstreckt.

13. Zweirädriges Fahrzeug (100) nach Anspruch 1, wobei die Drucksteuervorrichtung (300) mit einem vorderen Bremshebel (215) verbunden ist, um die Bremskraft unabhängig von der Vorderradbremse (205) aufzubringen, und der vordere Bremshebel (215) an der Lenkstangenanordnung (110) des Fahrzeugs (100) angebracht ist.

14. Ausrichtungshalterung (400), die dazu geeignet ist, mit einer Drucksteuervorrichtung (300) eines synchronisierten Bremssystems (200) für ein zweirädriges Kraftfahrzeug (100) nach einem der Ansprüche 1 bis 13 zusammenzuwirken, wobei die Ausrichtungshalterung (400) umfasst:
- einen Basisabschnitt (410); und
- ein oder mehrere Armelemente (405A, 405B, 405C, 405D), die von dem Basisabschnitt (410) getragen werden,
wobei
das eine oder die mehreren Armelement(e) (405A, 405B, 405C, 405D) so konfiguriert ist/sind, dass es/sie sich in Richtung eines oder mehrerer Eingangsanschlusses/anschlüsse (301, 302) und in Richtung eines oder mehrerer Ausgangsanschlusses/anschlüsse (303, 304) der Drucksteuerungsvorrichtung (300) erstreckt/erstrecken, und jedes des einen oder der mehreren Armelemente (405A, 405B, 405C, 405D) einen Aufnahmeabschnitt (R) aufweist, der in der Lage ist, nur einen oder mehrere spezifische Zwischenverbinder (305A, 305B, 305C, 305D) aufzunehmen, die einen oder mehrere Schläuche (224, 230, 235, 240) mit der Drucksteuervorrichtung (300) verbinden.

## Revendications

1. Véhicule motorisé à deux roues (100) comprenant un système de freinage synchronisé (200), ledit véhicule (100) comprenant :
un assemblage de cadre (105) comprenant un tube de tête (105 A) disposé dans une partie avant de celui-ci ;
un frein de roue avant (205) capable d'appliquer des forces de freinage à au moins une roue avant (115), ladite au moins une roue avant (115) pouvant tourner autour dudit tube de tête (105 A) pour permettre la direction dudit véhicule (100) ;
un frein de roue arrière (210) capable d'appliquer des forces de freinage à au moins une roue arrière (130) ;
un dispositif de contrôle de la pression (300) dudit système de freinage synchronisé (200) est relié fonctionnellement audit frein de roue arrière (210) par un premier tuyau de sortie (235) et est relié fonctionnellement audit frein de roue avant (205) par un second tuyau de sortie (240), ledit dispositif de contrôle de la pression (300) pouvant être actionné par un levier de frein synchrone (220), ledit dispositif de contrôle de la pression (300) est solidement disposé à proximité dudit tube de tête (105A) de l'ensemble de cadre (105) ;
**caractérisé par**
un support d'orientation (400) disposé à côté dudit dispositif de contrôle de la pression (300) et adapté pour fonctionner avec ledit dispositif de contrôle de la pression (300) afin de permettre le montage à l'épreuve des erreurs d'un ou de plusieurs connecteurs intermédiaires (305A, 305B, 305C, 305D) reliant un ou plusieurs tuyaux (225, 230, 235, 240) audit dispositif de contrôle de la pression (300), dans lequel
ledit support d'orientation (400) comprend un ou plusieurs éléments de bras (405A, 405B, 405C, 405D) et chacun des éléments de bras (405 A, 405B, 405C, 405D) comprend une partie de réception (R) capable de recevoir uniquement un connecteur intermédiaire spécifique dudit ou desdits connecteurs intermédiaires (305 A, 305B, 305C, 305D), ce qui permet d'obtenir un ajustement infaillible, et cet élément de bras (405 A, 405B, 405C, 405D) retient les connecteurs intermédiaires (405 A, 405B, 405C, 405D) dans une orientation spécifique, ce qui permet de conserver l'orientation souhaitée du ou des tuyaux (225, 230, 235, 240).

2. Véhicule motorisé à deux roues (100) selon la revendication 1, dans lequel ledit dispositif de contrôle de la pression (300) est sensiblement équidistant d'au moins un levier de frein (215, 220) monté sur un ensemble de guidon (110) rotatif autour dudit tube de tête (105A) et dudit frein de roue avant (205).

3. Véhicule motorisé à deux roues (100) selon la revendication 1, dans lequel ledit dispositif de contrôle de la pression (300) est solidement disposé devant ledit tube de tête (105 A), et ledit dispositif de contrôle de la pression (300) a un axe long (L-L') disposé sensiblement dans une première orientation parallèle à une direction latérale (RH-LH) dudit véhicule motorisé (100).

4. Véhicule motorisé à deux roues (100) selon la revendication 1, dans lequel ledit dispositif de contrôle de la pression (300) est solidement disposé vers un côté latéral (RH, LH) dudit tube de tête (105A), et ledit dispositif de contrôle de la pression (300) a un axe long (L-LD) disposé dans une deuxième orientation parallèle à une direction longitudinale (F-R) dudit véhicule à moteur (100).

5. Véhicule motorisé à deux roues (100) selon la revendication 1, 3 ou 4, dans lequel ledit dispositif de contrôle de la pression (300) est solidement monté sur ledit ensemble de cadre (105) à proximité dudit tube de tête (105A) dans au moins l'une de ladite première orientation ou de ladite seconde orientation, et ledit dispositif de contrôle de la pression (300) comprend au moins un port d'entrée (301, 302) disposé dans une direction descendante (DW) pour permettre l'acheminement incurvé d'un ou plusieurs tuyaux d'entrée (225, 230) reliant ledit au moins un levier de frein (215, 220) et ledit dispositif de contrôle de la pression (300) comprend au moins un port de sortie (303, 304) disposé dans une direction ascendante (UP) pour permettre l'acheminement dudit ou desdits tuyaux de sortie (235, 240) vers au moins l'un dudit frein de roue avant (205) et dudit frein de roue arrière (210).

6. Véhicule motorisé à deux roues (100) selon la revendication 1, 3 ou 4, dans lequel ledit dispositif de contrôle de la pression (300) est solidement monté sur ledit ensemble de cadre (105) à proximité dudit tube de tête (105A) dans au moins l'une de ladite première orientation et de ladite seconde orientation, et ledit dispositif de contrôle de la pression (300) comprend au moins un port d'entrée (301, 302) disposé dans une direction descendante (DW) et comprend au moins un port de sortie (303, 304) disposé dans une direction ascendante (UP).

7. Véhicule motorisé à deux roues (100) selon la revendication 1 ou 3, dans lequel ledit dispositif de contrôle de la pression (300) est monté sur un côté orienté vers l'avant du tube de tête (105 A) et est disposé sous ledit ensemble de poignée (110) et est au-dessus dudit frein de roue avant (120) entre les deux, de sorte que ledit dispositif de contrôle de la pression (300) est sensiblement équidistant dudit levier de frein synchrone (220) monté sur ledit ensemble de poignée (110) et sur ledit frein de roue avant (205).

8. Véhicule motorisé à deux roues (100) selon la revendication 1, dans lequel ledit dispositif de contrôle de la pression (300) est fixé à un élément de montage (105M) fixé à l'ensemble de cadre (105), ledit élément de montage (105M) a un profil en forme de U avec un espace libre pour permettre la fixation dudit dispositif de contrôle de la pression (300), et ledit élément de montage (105M) comprend un ou plusieurs points de montage prévus pour s'aligner avec un ou plusieurs points de montage prévus sur le dispositif de contrôle de la pression (300), permettant ainsi le montage du dispositif de contrôle de la pression (300) dans une orientation souhaitée.

9. Véhicule motorisé à deux roues (100) selon la revendication 1, dans lequel ledit dispositif de contrôle de la pression (300) est disposé essentiellement le long d'un centre latéral du véhicule (100), de sorte que le centre de gravité du dispositif de contrôle de la pression (300) et le centre de gravité du véhicule (100) sont alignés, assurant l'équilibre dans une direction latérale (RH-LH).

10. Véhicule motorisé à deux roues (100) selon la revendication 1, dans lequel ledit dispositif de contrôle de la pression (300) est disposé à un décalage latéral par rapport à un centre latéral du véhicule (100), le dispositif de contrôle de la pression (300) équilibrant le centre de gravité du véhicule (100).

11. Véhicule à motorisé à deux roues (100) selon la revendication 1, dans lequel ledit dispositif de contrôle de la pression (300) est relié à un levier de frein (220) et à l'autre levier de frein (215) par un premier tuyau d'entrée (225) et un second tuyau d'entrée (230), respectivement, et ledit dispositif de contrôle de la pression (300) est relié au frein de la roue avant (205) par un second tuyau (240), et dans lequel ledit rapport entre la longueur maximale et la longueur minimale entre le premier tuyau d'entrée (255), le second tuyau d'entrée (230) et le second tuyau de sortie (240) est compris entre 0. 8 à 1,2.

12. Véhicule motorisé à deux roues (100) selon la revendication 1, dans lequel ledit dispositif de contrôle de la pression (300) est disposé derrière un panneau avant (140A) et au-dessus d'une aile avant (150), ledit panneau avant (140A) couvre au moins une partie du dispositif de contrôle de la pression (300), et ledit panneau avant (140A) est soutenu par un support supplémentaire (106) monté sur ledit tube de direction (105A) s'étendant dans la direction avant (F) au-delà d'une partie la plus en avant dudit dispositif de contrôle de la pression (300).

13. Véhicule à deux roues (100) selon la revendication 1, dans lequel ledit dispositif de contrôle de la pression (300) est relié à un levier de frein avant (215) pour l'application d'une force de freinage indépendante au frein de la roue avant (205) et ledit levier de frein avant (215) est monté sur ledit ensemble de poignée (110) dudit véhicule (100).

14. Support d'orientation (400) adapté pour fonctionner avec un dispositif de contrôle de la pression (300) d'un système de freinage synchronisé (200) pour un véhicule à moteur à deux roues (100) selon l'une quelconque des revendications 1 à 13, ledit support d'orientation (400) comprenant :
- une partie de base (410) ; et
- un ou plusieurs éléments de bras (405A, 405B, 405C, 405D) supportés par ladite partie de base (410),
dans lequel
ledit ou lesdits éléments de bras (405 A, 405B, 405C, 405D) sont configurés pour s'étendre vers un ou plusieurs ports d'entrée (301, 302) et vers un ou plusieurs ports de sortie (303, 304) dudit dispositif de contrôle de la pression (300), et chacun desdits éléments de bras (405A, 405B, 405C, 405D) comprend une partie réceptrice (R) capable de recevoir uniquement un ou plusieurs connecteurs intermédiaires spécifiques (305A, 305B, 305C, 305D) reliant un ou plusieurs tuyaux (224, 230, 235, 240) audit dispositif de contrôle de la pression (300).
